# EUROPÄISCHE PATENTSCHRIFT

(11) **EP 2 219 844 B1**
(45) Veröffentlichungstag und Bekanntmachung des Hinweises auf die Patenterteilung: **09.12.2015**
(21) Anmeldenummer: 08867057.5
(22) Anmeldetag: 19.12.2008
(51) Int. Cl.: B29C 45/00, B29C 45/16

(54) **GIESSMASCHINENSYSTEM UND VERFAHREN ZUR HERSTELLUNG VON METALL/KUNSTSTOFF-HYBRIDBAUTEILEN**
CASTING MACHINE SYSTEM AND PROCESS FOR PRODUCING HYBRID METAL/PLASTIC COMPONENTS
SYSTÈME DE MACHINES DE COULÉE ET PROCÉDÉ DE FABRICATION D'ÉLÉMENTS HYBRIDES MÉTAL/PLASTIQUE

(30) Priorität: 21.12.2007 DE 102007062829
(43) Veröffentlichungstag der Anmeldung: 25.08.2010
(73) Patentinhaber: Oskar Frech GmbH + Co. KG, 73614 Schorndorf-Weiler (DE)
(72) Erfinder: ERHARD, Norbert, 73547 Lorch (DE); DANNENMANN, Helmar, 73614 Schorndorf (DE); KURZ, Jürgen, 73655 Plüderhausen (DE); MORGENSTERN, Knut, 09126 Chemnitz (DE); NENDEL, Wolfgang, 09569 Oederan (DE); ZUCKER, Tino, 09456 Mildenau (DE); ZIMMER, Bernd, 08223 Falkenstein/Vogtl (DE); KAUSCH, Martin, 09235 Burkhardtsdorf (DE)
(74) Vertreter: Patentanwälte Ruff, Wilhelm, Beier, Dauster & Partner mbB
(86) Internationale Anmeldenummer: PCT/EP2008/010955
(87) Internationale Veröffentlichungsnummer: WO 2009/083196

(56) Entgegenhaltungen:
- WO-A-2005/053930
- DE-A1- 10 325 530
- GB-A- 2 432 549
- JP-A- 7 108 559
- JP-A- H06 246 783
- US-A- 2 337 550
- US-A1- 2004 035 548
- US-A1- 2006 231 231
- WENZEL M: "DURCH ROBOTER VERKETTET. ÖLINKED BY ROBOTS" KUNSTSTOFFE, CARL HANSER VERLAG, MUNCHEN, DE, Bd. 85, Nr. 9, 1. September 1995 (1995-09-01), Seite 1353/1354, XP000522525 ISSN: 0023-5563

## Beschreibung

Die Erfindung bezieht sich auf ein Gießmaschinensystem und ein Verfahren zur Herstellung von Metall/Kunststoff-Hybridbauteilen. Unter Metall/Kunststoff-Hybridbauteilen werden vorliegend Bauteile verstanden, die aus Metall und Kunststoff bestehen und dadurch hergestellt werden, dass zunächst ein Vorprodukt aus einem der beiden Materialien gegossen und anschließend das Vorprodukt einem zweiten Gießprozess unterzogen wird, in welchem es mit dem anderen Material versehen wird. Beispielsweise kann zunächst ein Metallstück als Vorprodukt in einem Metallgießprozess, z.B. mittels Druckguss, gefertigt und dieses anschließend in einem entsprechenden Kunststoffgießvorgang, z.B. einem Kunststoffspritzgießvorgang, mit Kunststoff ummantelt, partiell beschichtet und/oder angespritzt werden. Alternativ kann zunächst ein Kunststoffteil als Vorprodukt in einem Kunststoffgießprozess hergestellt und dann an dieses das Metall in einem Metallgießprozess angegossen werden.

Es ist Stand der Technik, z.B. metallische Vorprodukte an einem ersten Ort herzustellen, auf dem Frachtweg an einen zweiten Ort zu verbringen und dort durch den zweiten Gießprozess das Hybridbauteil aus dem Vorprodukt zu fertigen. Dabei steht der zweite Gießprozess nicht mehr in zeitlichem Zusammenhang mit dem ersten Gießprozess, sondern erfolgt z.B. Tage oder Wochen später, gegebenenfalls unter Zwischenlagerung des Vorprodukts.

Alternativ ist es Stand der Technik, solche Hybridbauteile innerhalb einer einzigen Maschine mit relativ komplizierten Formen zur Bereitstellung sowohl wenigstens einer Metall-Gießkavität als auch wenigstens einer Kunststoff-Gießkavität herzustellen. Hierzu seien z.B. die Offenlegungsschriften EP 1 718 451 A1, JP 06-246783 A und JP 2000-280277 A genannt. Bei einer weiteren Hybridgießmaschine dieser Art, wie sie in der Offenlegungsschrift WO 2005/053930 A1 offenbart ist, ist zusätzlich eine Temperaturüberwachung implementiert, welche die Maßnahme beinhaltet, die Temperatur des im ersten Gießprozess erhaltenen Vorproduktes zu messen und an ein Steuerungssystem zu übermitteln, das den zweiten Gießprozess in Abhängigkeit von dieser Temperaturinformation steuert. Dabei kann der erste Gießprozess ein Metallgießprozess, alternativ aber auch ein Kunststoffspritzgießprozess sein, woran sich der zweite Gießprozess als Kunststoffspritzgießprozess bzw. Metallgießprozess anschließt.

Die Offenlegungsschrift US 2004/0035548 A1 offenbart eine Anordnung mit einer Kunststoffspritzgießmaschine und einer Metalldruckgießmaschine. In der Kunststoffspritzgießmaschine wird zunächst ein Kunststoff-Vorprodukt gegossen, das nach Entnehmen aus dieser Gießmaschine in eine Entfettungseinheit transferiert wird. Dort wird es durch einen Aufheizprozess in einer Inertgasatmosphäre auf eine Temperatur aufgeheizt, die höher als eine Schmelztemperatur eines Harzbindemittels ist, das im ersten Gießprozess eingesetzt wird. Damit wird das Harzbindemittel aufgeschmolzen und aus dem Vorprodukt ausgetrieben, das durch diesen Vorgang in ein poröses Vorprodukt umgewandelt wird. Das poröse Vorprodukt wird dann in die Metallgießmaschine transferiert, wo durch einen entsprechenden metallischen Gießprozess aus dem Vorprodukt ein Metall/Kunststoff-Hybridbauteil gebildet wird, bei dem die zuvor erzeugten Hohlräume des porösen Vorproduktes durch das Metallmaterial gefüllt werden, für das ein Metall mit niedrigem Schmelzpunkt verwendet wird, während für das Kunststoffmaterial des Vorproduktes ein Kohlenstoff-Nanomaterial verwendet wird.

Der Erfindung liegt als technisches Problem die Bereitstellung eines Gießmaschinensystems und eines zugehörigen Herstellungsverfahrens für Metall/Kunststoff-Hybridbauteile zugrunde, die eine Fertigung derartiger Hybridbauteile mit vergleichsweise flexibler Gießmaschinenausnutzung und relativ geringem Kosten- und/oder Zeitaufwand ermöglichen.

Die Erfindung löst dieses Problem durch die Bereitstellung eines Gießmaschinensystems mit den Merkmalen des Anspruchs 1 und eines Herstellungsverfahrens mit den Merkmalen des Anspruchs 10.

Das erfindungsgemäße Gießmaschinensystem beinhaltet eine Metall-gießmaschine und eine Kunststoffgießmaschine als zwei separate, d.h. eigenständige Gießmaschinen. Dies macht es möglich, die beiden Maschinen flexibel bei Bedarf auch anderweitig z.B. zur Herstellung reiner metallischer Gussstücke oder reiner Kunststoffspritzgießprodukte einzusetzen. Andererseits kann größerer Transport-/Frachtaufwand vermieden werden, indem die beiden Gießmaschinen an einem gleichen Fertigungsort aufgestellt werden. Eine Transfereinrichtung sorgt für den Transfer des im ersten Gießprozess erhaltenen Vorproduktes zur zweiten Gießmaschine, in der dann aus dem Vorprodukt durch einen zweiten Gießprozess das gewünschte Metall/Kunststoff-Hybridbauteil gebildet wird.

Das Gießmaschinensystem beinhaltet außerdem eine Temperiereinrichtung, die dafür ausgelegt ist, das Vorprodukt nach seiner Entnahme aus der ersten Gießmaschine steuerbar temperieren zu können, bevor es dem zweiten Gießprozess unterzogen wird. Unter dem Begriff Temperierung ist dabei vorliegend eine jeweils geeignet wählbare aktive Beheizung und/oder Kühlung des Vorproduktes durch eine entsprechend bereitgestellte Beheizungs- bzw. Kühlvorrichtung zu verstehen. Bei der Steuerbarkeit dieser Temperierung kann es sich je nach Bedarf und Anwendungsfall um eine reine Steuerung oder alternativ um eine Regelung des betreffenden Temperierprozesses bzw. der Temperatur des Vorproduktes handeln. Damit können Metall/Kunststoff-Hybrid-bauteile entsprechend z.B. durch das erfindungsgemäße Verfahren hergestellt werden.

In einer konstruktiv und funktionell vorteilhaften Ausgestaltung der Erfindung ist die Temperiereinrichtung ganz oder teilweise integrierter Bestandteil der Transfereinrichtung. In einer weiteren Ausgestaltung dieser Maßnahme beinhaltet die Transfereinrichtung wenigstens einen Werkstückträger, auf dem das Vorprodukt platzierbar ist, und die Temperiereinrichtung umfasst als integralen Teil des Werkstückträgers eine Temperatursensorik und/oder ein Temperiermittel zum aktiven Beheizen oder Kühlen des Vorprodukts. Auf diese Weise kann das Vorprodukt während seines Transfers vom ersten zum zweiten Gießprozess in kontrollierter Weise auf einer gewünschten Temperatur gehalten werden.

Eine Ausgestaltung der Erfindung beinhaltet eine Restwärmenutzung. Dazu kann die Temperiereinrichtung ein Restwärmenutzungsmittel umfassen, mit dem Restwärme des Hybridbauteils nach dessen Herstellung im zweiten Gießprozess zur Beheizung eines jeweils im ersten Gießprozess erhaltenen Vorprodukts genutzt werden kann.

In einer Ausgestaltung der Erfindung beinhaltet die Temperiereinrichtung ein Mittel zur Erfassung und Überwachung einer Temperatur des Vorprodukts nach Entnahme aus der ersten Gießmaschine. Dies kann zu einer vorteilhaften gesteuerten Temperierung des Vorproduktes beitragen, nachdem es aus der ersten Gießmaschine entnommen wurde.

In einer Weiterbildung der Erfindung kann das Vorprodukt in einer Bearbeitungsstation einem entsprechenden Bearbeitungsprozess unterzogen werden, bevor es in die zweite Gießmaschine verbracht wird. Vor, während und/oder nach diesem Bearbeitungsprozess wird das Vorprodukt durch die Temperiereinrichtung auf einer gewünschten, gegenüber Raumtemperatur höheren Temperatur gehalten. Dabei kann der Bearbeitungsprozess auch ein Montageprozess sein oder einen solchen beinhalten.

In einer weiteren Ausgestaltung ist die Bearbeitungsstation zur Durchführung eines vorgebbaren Bearbeitungsprozesses während einer Abkühlphase eingerichtet, während der das Vorprodukt von einer Temperatur am Ende des ersten Gießprozesses auf eine niedrigere vorgebbare Solltemperatur vor Beginn des zweiten Gießprozesses abkühlt, wobei diese Solltemperatur einen Temperaturwert hat, der höher als Raumtemperatur vorgegeben wird. Diese Maßnahme macht es möglich, das Vorprodukt während einer zum Abkühlen erforderlichen Zeitdauer vor Durchführen des zweiten Gießprozesses dem betreffenden Bearbeitungsprozess zu unterziehen, wodurch wiederum die gesamte Herstellungsdauer des Hybridbauteils optimiert werden kann. Dazu kann dafür gesorgt werden, dass der Bearbeitungsprozess beendet wird, sobald das Vorprodukt die vorgegebene Solltemperatur erreicht hat. Eine Temperierung im Sinne einer aktiven Beheizung und/oder Abkühlung ist in diesem Fall nicht zwingend erforderlich, kann aber optional vorgesehen sein, beispielsweise um das Vorprodukt noch für eine gewisse Zeit auf der Solltemperatur zu halten.

In einer Ausgestaltung der Erfindung beträgt die Abkühl-Solltemperatur zwischen 60°C und 190°C, wodurch eine optimale Anbindung oder Anpassung an den anschließenden zweiten Gießprozess sichergestellt werden kann.

In einer Weiterbildung der Erfindung umfasst die Transfereinrichtung einen Handhabungsroboter. Damit kann das Vorprodukt in sehr komfortabler und automatisierter Weise transportiert werden, einschließlich Entnahme aus der ersten Gießmaschine und/oder Einbringen in die Transfereinrichtung und/oder Einbringen in eine optionale Bearbeitungsstation und/oder in die zweite Gießmaschine.

In einer Ausgestaltung der Erfindung wird im ersten Gießprozess ein metallisches Vorprodukt in einer Metallgießmaschine gefertigt, dessen Anguss mindestens bis zum Abschluss des Transfers in die zweite Gießmaschine belassen wird. Der Anguss kann dadurch z.B. zu Handhabungszwecken während des Transfers genutzt werden. In weiterer Ausgestaltung kann der metallische Anguss durch den zweiten Gießprozess mit Kunststoffmaterial umspritzt werden, um auf diese Weise ein Metall/Kunststoff-Hybridbauteil entsprechender Gestalt zu bilden.

Vorteilhafte Ausführungsformen der Erfindung sind in den Zeichnungen dargestellt und werden nachfolgend beschrieben. Hierbei zeigen:
- Fig. 1: ein schematisches Blockdiagramm eines Verfahrens zur Herstellung von Metall/Kunststoff-Hybridbauteilen und eines dafür geeigneten Gießmaschinensystems,
- Fig. 2: eine Draufsicht auf einen konkreten Aufbau eines Gießmaschinensystems zur Herstellung von Metall/Kunststoff-Hybridbauteilen,
- Fig. 3: ein schematisches Blockdiagramm eines Gießmaschinensystems mit linearer Transfereinrichtung,
- Fig. 4: ein Blockdiagramm eines Gießmaschinensystems mit zirkulierender Transfereinrichtung,
- Fig. 5: ein Blockdiagramm eines Gießmaschinensystems mit Karussell-Transfereinrichtung,
- Fig. 6: ein Vorderansicht-Blockdiagramm eines Gießmaschinensystems mit Würfel-Transfereinrichtung und
- Fig. 7: ein Draufsicht-Blockdiagramm des Gießmaschinensystems von Fig. 6.

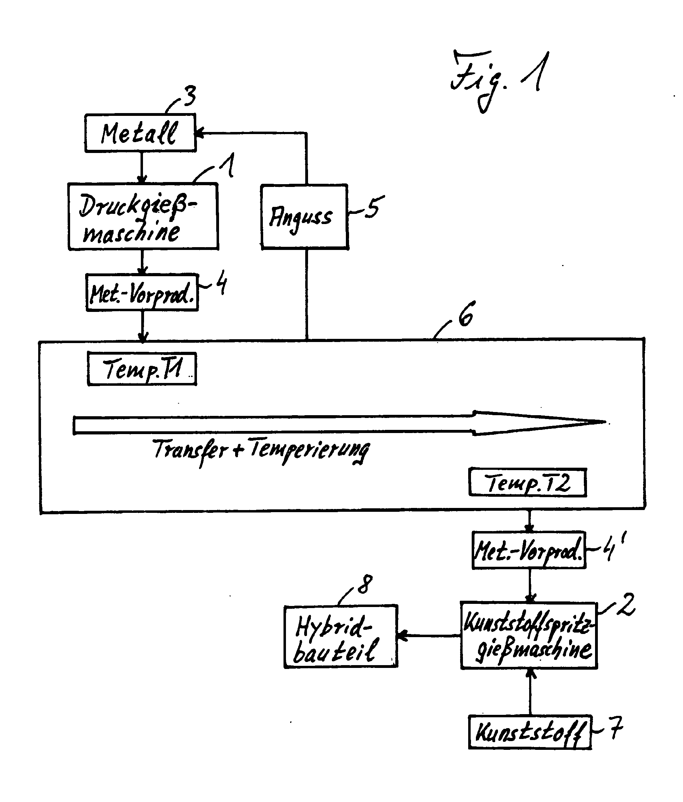

Das in Fig. 1 gezeigte Gießmaschinensystem beinhaltet eine erste Gießmaschine in Form einer Druckgießmaschine 1 für metallischen Druckguss sowie eine zweite Gießmaschine in Form einer Kunststoffspritzgießmaschine 2, die separat von der ersten Gießmaschine 1, jedoch in definierter räumlicher Zuordnung zu dieser vorgesehen ist. Die Druckgießmaschine 1 ist von einer herkömmlichen Bauart mit einer oder mehreren Metall-Gießkavitäten, um aus einer bereiteten Metallschmelze 3, z.B. einer Schmelze aus Zink, Aluminium, Magnesium oder einem anderen Nichteisen(NE)-Metall, ein entsprechendes metallisches Vorprodukt 4 zu gießen. Über ein herkömmliches Angusssystem 5 kann ein Anguss am metallischen Vorprodukt 4 nach dessen Entnahme aus einer die zugehörige Metall-Gießkavität bereitstellenden Gießform der Druckgießmaschine 1 entfernt und zur Metallschmelzebereitung 3 rückgeführt werden.

Das somit im metallischen Druckgießvorgang als einen ersten Gießprozess erhaltene metallische Vorprodukt 4 befindet sich bei Entnahme aus der Druckgießmaschine 1 auf einem vom Gießprozess und dem eingesetzten Metall abhängigen Temperaturniveau T1 und wird durch eine Transfer- und Temperierungseinrichtung 6 zum Ort der zweiten Gießmaschine 2 verbracht und auf eine zur Durchführung eines zweiten Gießprozesses, hier eines Kunststoffspritzgießprozesses durch die zweite Gießmaschine 2, geeignetes, vorgebbares Temperaturniveau T2 eingestellt. Das auf diese Zieltemperatur T2 temperiert gehaltene Metall-Vorprodukt 4' wird dann in einer entsprechenden Gießkavität der Kunststoffspritzgießmaschine 2 platziert und mit zugeführtem Kunststoffmaterial 7 ummantelt, partiell beschichtet und/oder angespritzt. Dadurch wird ein gewünschtes Metall/Kunststoff-Hybridbauteil 8 erhalten, das anschließend aus der Kunststoffspritzgießmaschine 2 entnommen werden kann.

Die Transfer- und Temperierungseinrichtung beinhaltet geeignete Transfermittel und Temperiermittel, um das Vorprodukt 4 vom Ort der Druckgießmaschine 1 zum Ort der Kunststoffspritzgießmaschine 2 zu transferieren und es dabei von der Temperatur T1 am Ende des metallischen Druckgießprozesses auf die zum Durchführen des Kunststoffspritzgießprozesses geeignete Temperatur T2 zu bringen. Die beiden Gießmaschinen 1, 2 sind typischerweise räumlich benachbart z.B. in einer gleichen Fabrikationshalle angeordnet, so dass der Transferweg für das Vorprodukt von typisch z.B. einigen Metern bis einigen zehn Metern relativ kurz gehalten wird. Die Temperiermittel sind je nach Bedarf und Anwendungsfall geeignet ausgelegt, um das Vorprodukt vor, während und/nach seinem Transfer vom Ort der ersten Gießmaschine 1 zum Ort der zweiten Gießmaschine 2 wie gewünscht zu temperieren, d.h. vom Temperaturniveau T1 auf das Temperaturniveau T2 zu bringen. Je nach Fall schließt diese Temperierung eine aktive Beheizung des Vorproduktes durch eine entsprechende Heizeinheit oder eine aktive Kühlung desselben durch eine entsprechende Kühleinrichtung ein. Dabei können die Temperiermittel und mithin die von diesen gebildete Temperiereinrichtung ganz oder teilweise in die Transfermittel bzw. die von diesen gebildete Transfereinrichtung integriert sein. Außerdem können eine oder mehrere Bearbeitungsstationen ganz oder teilweise in die Transfer- und Temperierungseinrichtung 6 integriert sein, um das Vorprodukt in einer gewünschten Weise zu bearbeiten, bevor es in der Kunststoffspritzgießmaschine 2 platziert wird.

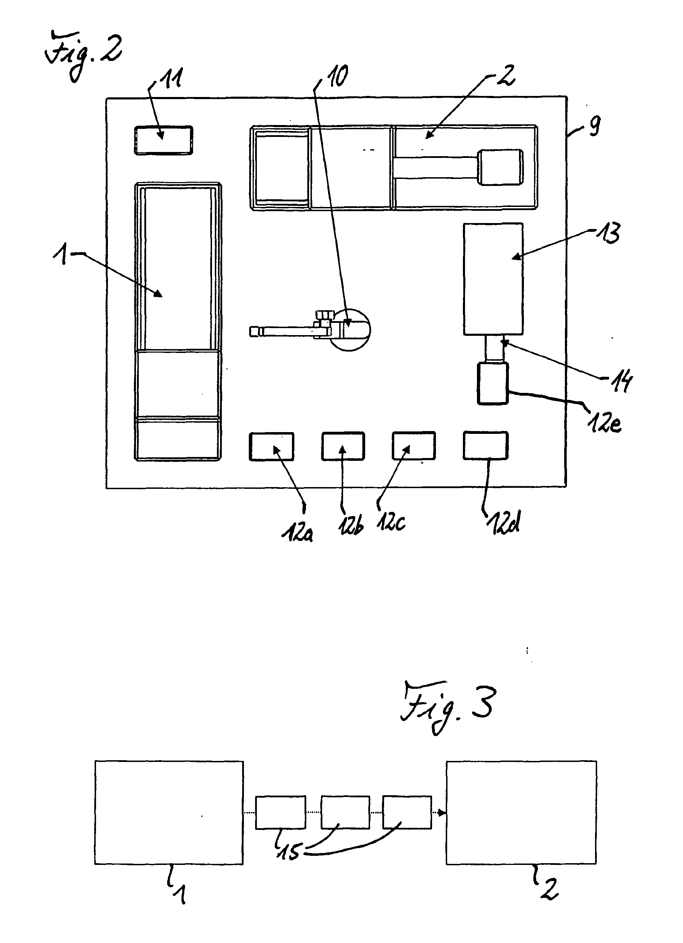

Wie aus Fig. 1 und den obigen Erläuterungen ersichtlich, stellt Fig. 1 sowohl wesentliche Komponenten des betrachteten Gießmaschinensystems als auch gleichzeitig den geschilderten Verfahrensablauf zur Herstellung entsprechender Metall/Kunststoff-Hybridbauteile dar. Fig. 2 zeigt in einer Draufsicht in weiterer Konkretisierung einen möglichen, vorteilhaften Aufbau eines Gießmaschinensystems nach Art von Fig. 1. Wie aus Fig. 2 ersichtlich, befindet sich das gesamte Gießmaschinensystem innerhalb einer Produktionsfläche 9 z.B. einer zugehörigen Produktionshalle. In einem mittigen Bereich befindet sich als wesentlicher Bestandteil der Transfereinrichtung ein Handhabungsroboter 10 herkömmlicher Art, um den herum die übrigen Systemkomponenten einschließlich erster Gießmaschine bzw. Metalldruckgießmaschine 1 und zweiter Gießmaschine bzw. Kunststoffspritzgießmaschine 2 angeordnet sind. Zusätzlich zu den beiden Gießmaschinen 1, 2 sind im Zugriffsbereich des Handhabungsroboters 10 mehrere Bearbeitungsstationen 12a bis 12e und eine Temperierstation 13 mit einer zugehörigen Förderbandeinheit 14 angeordnet. Eine Steuereinheit 11, die das gesamte Gießmaschinensystem steuert, ist an geeigneter Stelle außerhalb des Zugriffsbereichs des Handhabungsroboters 10 angeordnet.

Nach Herstellen des Vorproduktes in der ersten Gießmaschine 1 wird es vom Handhabungsroboter 10 aus der zugehörigen Gießform entnommen und je nach Bedarf direkt zur zweiten Gießmaschine 2 transferiert oder zunächst in die Temperierstation 13 oder in wenigstens eine der Bearbeitungsstationen 12a bis 12e verbracht. Jede Bearbeitungsstation 12a bis 12e ist zur Durchführung eines bestimmten Bearbeitungsprozesses herkömmlicher Art am dort platzierten Vorprodukt eingerichtet. Dabei kann es sich z.B. auch um einen reinen Montageprozess handeln, oder der Bearbeitungsprozess kann einen solchen beinhalten. Je nach Anwendungsfall kann das Vorprodukt nur in einer oder sukzessiv in mehreren der Bearbeitungsstationen 12a bis 12e bearbeitet werden. Über die Förderbandeinheit 14 kann das Vorprodukt in die Temperierstation 13 gefördert und dort aktiv beheizt oder gekühlt werden, um das zum Platzieren in der zweiten Gießmaschine 2 gewünschte Temperaturniveau zu erreichen und beizubehalten. Im gezeigten Beispiel ist die Förderbandeinheit 14 an einer letzte Bearbeitungsstation 12e direkt angeschlossen. Während im gezeigten Beispiel der Transport des Vorproduktes auch zwischen den Bearbeitungsstationen durch den Handhabungsroboter 10 erfolgt, kann in alternativen Ausführungen eine hierfür dienende Förderbandeinheit vorgesehen sein, welche die Bearbeitungsstationen 12a bis 12e miteinander verbindet.

Die Temperierstation 13 ist zur Erfüllung ihrer Temperierfunktion geeignet ausgelegt und weist dazu insbesondere eine Heizeinrichtung und/oder eine Kühleinrichtung sowie eine Temperatursensorik auf, um die Temperatur des in die Temperierstation 13 eingebrachten Vorproduktes zu erfassen. Eine zugehörige Temperatursteuereinheit wertet die von der Temperatursensorik gewonnenen Informationen über die Vorprodukttemperatur aus und steuert davon abhängig die Heiz- oder Kühleinrichtung. Das solchermaßen auf dem gewünschten Temperaturniveau T2 gehaltene Vorprodukt wird dann vom Handhabungsroboter 10 aus der Temperierstation 13 entnommen und in der zweiten Gießmaschine 2 zur Durchführung des zweiten Gießprozesses platziert. Danach entnimmt der Handhabungsroboter 10 der zweiten Gießmaschine 2 das fertige Metall/Kunststoff-Hybridbauteil.

Im obigen Beispiel der Fig. 1 und 2 ist die erste Gießmaschine 1 eine Metallgießmaschine und die zweite Gießmaschine 2 eine Kunststoffspritzgießmaschine. Das für die Durchführung des Kunststoffspritzgießprozesses in der zweiten Gießmaschine 2 geeignete Temperaturniveau T2 für das im ersten Gießprozess gefertigte metallische Vorprodukt 4' beim Einbringen in die zweite Gießmaschine 2 liegt typischerweise höher als Raumtemperatur, beispielweise auf einem Temperaturwert zwischen 60°C und 190°C. Je nach Temperatur T1 des Vorproduktes 4 nach Entnahme aus der ersten Gießmaschine 1, der Abkühlrate des Vorproduktes 4 und der Zeitdauer bis zum Platzieren in der zweiten Gießmaschine 2 ergreift die Temperiereinrichtung bzw. die Temperierstation 13 die geeigneten Temperierungsmaßnahmen. Wenn das Vorprodukt z.B. noch zu heiß ist, d.h. seine Temperatur über dem gewünschten Solltemperaturwert zum Einbringen in die zweite Gießmaschine 2 ist, kann die Temperiereinrichtung das Vorprodukt 4 aktiv kühlen. Dies verkürzt die Zeitdauer bis zum Einbringen des Vorproduktes in die zweite Gießmaschine 2 und dadurch die gesamte Herstellungsdauer des Metall/Kunststoff-Hybridbauteils. Wenn das Vorprodukt hingegen den Solltemperaturwert T2 zum Einbringen in die zweite Gießmaschine 2 bereits erreicht oder unterschritten hat, bevor es zum Platzieren in der zweiten Gießmaschine 2 bereit ist, sorgt die Temperiereinrichtung durch aktives Beheizen dafür, dass das Vorprodukt den Solltemperaturwert T2 erreicht hat, wenn es in der zweiten Gießmaschine 2 platziert wird.

Das Temperaturniveau T1 am Ende des metallischen Druckgießprozesses liegt typischerweise deutlich über dem zum Einbringen des Vorproduktes 4 in die Kunststoffspritzgießmaschine 2 bzw. für die Durchführung des dortigen Kunststoffspritzvorgangs gewünschten Temperaturniveau T2. Dieses Temperaturniveau T2 ist seinerseits typischerweise noch deutlich über Raumtemperatur, d.h. über ca. 20°C. Vor, während und/oder nach dem Transfer des Vorproduktes 4 und ggf. während eines jeweiligen Bearbeitungsprozesses in einer der Bearbeitungsstationen 12a bis 12e kann das Vorprodukt 4 abkühlen, bis es das Solltemperaturniveau T2 für das Einbringen in die Kunststoffspritzgießmaschine 2 erreicht hat. Die Temperatursensorik kann dabei so ausgelegt sein, dass sie die Temperatur des Vorproduktes auch schon vor Einbringen in die Temperierstation 13 erfasst, z.B. durch entsprechende Temperaturfühler, die am Handhabungsroboter 10, insbesondere einem Greiferteil desselben, und/oder an der jeweiligen Bearbeitungsstation 12a bis 12e angeordnet sind.

Wenn durch diese Temperaturüberwachung festgestellt wurde, dass das Vorprodukt den Solltemperaturwert T2 zum Einbringen in die Kunststoffspritzgießmaschine 2 erreicht hat, kann gemäß einer entsprechenden Ausführungsform der Erfindung vorgesehen sein, das Vorprodukt 4 zu diesem Zeitpunkt in der zweiten Gießmaschine 2 zu platzieren, wenn es sich zuvor noch in einer der Bearbeitungsstationen 12a bis 12e oder am Handhabungsroboter 10 befindet. In diesem Fall können aktive Beheizungs- oder Abkühlmaßnahmen entfallen, wie sie ansonsten in der Temperierstation 13 vorhanden sind.

Wie die obigen Erläuterungen deutlich machen, ermöglicht die Erfindung eine Optimierung/Reduzierung der Zykluszeiten zur Herstellung von Metall/Kunststoff-Hybridbauteilen, indem die Temperatur des im ersten Gießprozess hergestellten Vorproduktes überwacht und abhängig davon das Vorprodukt zu einem geeigneten Zeitpunkt in der zweiten Gießmaschine platziert bzw. der zweite Gießprozess durchgeführt wird, sobald das Vorprodukt ein gewünschtes Temperaturniveau erreicht hat, oder indem das Vorprodukt durch aktives Beheizen oder Kühlen auf dem gewünschten Temperaturniveau gehalten wird oder dieses schneller erreicht. Abkühlphasen oder allgemeiner Temperierphasen können gleichzeitig zur Bearbeitung des Vorproduktes genutzt werden. Wenngleich in Fig. 2 die Temperierstation 13 separat von den Bearbeitungsstationen 12a bis 12e angeordnet ist, kann die Temperiereinrichtung in alternativen Ausführungsformen auch ganz oder teilweise in eine oder mehrere der Bearbeitungsstationen 12a bis 12e und/oder in die Transfereinrichtung, wie den Handhabungsroboter 10, integriert sein.

Ein weiterer Vorteil des erfindungsgemäßen Gießmaschinensystems liegt darin, dass für die beiden Gießmaschinen 1, 2 eine Metalldruckgießmaschine und eine Kunststoffspritzgießmaschine von jeweils herkömmlicher Bauart verwendbar sind, die zeitweise auch zur Herstellung reiner metallischer Werkstücke bzw. reiner Kunststoffteile genutzt werden können. Es bedarf für die erfindungsgemäße Herstellung von Metall/Kunststoff-Hybridbauteilen keiner komplexen Formen, die kombiniert eine oder mehrere Metall-Gießkavitäten und eine oder mehrere Kunststoff-Gießkavitäten beinhalten. Es genügt vielmehr die Bereitstellung einer oder mehrerer Metall-Gießkavitäten durch die Metalldruckgießmaschine 1 und einer oder mehrerer Kunststoff-Gießkavitäten durch die Kunststoffspritzgießmaschine 2.

Bislang wurde hauptsächlich auf den Fall eingegangen, dass im ersten Gießprozess durch eine Metallgießmaschine ein metallisches Vorprodukt hergestellt und dieses dann einem Kunststoffspritzvorgang unterzogen wird. Alternativ umfasst die Erfindung jedoch in gleicher Weise Anwendungen, bei denen die erste Gießmaschine eine KunststoffGießmaschine und die zweite Gießmaschine eine Metall-Gießmaschine ist. Im ersten Gießprozess wird dann ein Kunststoffteil als Vorprodukt gefertigt, das im zweiten, metallischen Gießprozess mit Metall umgossen bzw. angegossen wird, um ein entsprechendes Metall/Kunststoff-Hybridbauteil zu bilden.

In einer weiteren vorteilhaften, nicht näher gezeigten Ausführungsform ist eine Restwärmenutzung vorgesehen, wozu die Temperiereinrichtung, z.B. eine solche gemäß den Fig. 1 und 2, ein entsprechendes Restwärmenutzungsmittel umfasst. Die Restwärmenutzung beinhaltet die Maßnahme, Restwärme eines jeweils im zweiten Gießprozess erhaltenen Metall/Kunststoff-Hybridbauteils zur Beheizung eines jeweils im ersten Gießprozess erhaltenen Vorprodukts zu nutzen. Der hierfür nötige Wärmetransport kann z.B. über ein übliches flüssiges oder gasförmiges Wärmeträgermedium erfolgen. Hierbei kann es sich z.B. um ein Temperiermedium handeln, dem ein entsprechender Temperierkreislauf zugeordnet ist, mit dem das gefertigte Hybridbauteil aktiv gekühlt und das Vorprodukt aktiv erwärmt wird.

Eine weitere Restwärmenutzung kann darin bestehen, den durch das Angusssystem 5 von Fig. 1 vom Vorprodukt abgetrennten, noch heißen Anguss in die Metallschmelzebereitung 3 einzuspeisen und dadurch nicht nur Material, sondern auch Wärme rückzuführen. In einer alternativen Variante der Erfindung wird der Anguss am Vorprodukt belassen und kann z.B. als Handhabungshilfe während des Transfers zur zweiten Gießmaschine genutzt werden. Er kann dann entfernt werden, nachdem das Vorprodukt die zweite Gießmaschine erreicht hat, oder er wird alternativ weiter belassen und im zweiten Gießprozess mit Kunststoff umspritzt bzw. angespritzt, um ein entsprechend gestaltetes Metall/Kunststoff-Hybridbauteil herzustellen. Allgemein ist im Rahmen der Erfindung eine Angussabtrennung je nach Bedarf vor Entnahme des Vorprodukts aus der ersten Gießmaschine, direkt nach Entnahme des Vorprodukts aus der ersten Gießmaschine, vor Einbringen des Vorprodukts in die zweite Gießmaschine und nach einem oder mehreren Handhabungs- und/oder Bearbeitungsvorgängen nach Entnahme des Vorprodukts aus der ersten Gießmaschine oder nach dem Platzieren des Vorprodukts in der zweiten Gießmaschine möglich, oder der Anguss wird gar nicht abgetrennt.

Die Fig. 3 bis 7 veranschaulichen einige spezielle Realisierungen möglicher Transfereinrichtungen mit ggf. integrierten Temperier- und/oder Bearbeitungsmaßnahmen alternativ oder zusätzlich zu einem Handhabungsroboter und/oder den Bearbeitungsstationen 12a bis 12e mit angekoppelter Temperierstation 13 gemäß Fig. 2.

Speziell zeigt Fig. 3 eine eingleisige lineare Transfereinrichtung zwischen erster Gießmaschine 1 und zweiter Gießmaschine 2. Diese Transfereinrichtung beinhaltet eine Mehrzahl von sukzessiven Werkstückträgern 15, deren Anzahl beispielsweise abhängig von den Gießzykluszeiten in den beiden Gießmaschinen 1, 2, etwaigen Bearbeitungsvorgängen und Temperierungsmaßnahmen festgelegt wird. Die einzelnen Werkstückträger 15 können untereinander z.B. über eine Förderbandeinheit oder in anderer Weise gekoppelt sein und/oder von einem Handhabungsroboter gefördert werden. Jeder Werkstückträger 15 weist eine Aufnahme zum Platzieren eines aus der ersten Gießmaschine 1 entnommenen Vorproduktes auf. Je nach Anwendungsfall kann ein jeweiliger Werkstückträger als Bearbeitungsstation ausgeführt sein oder eine solche umfassen, um das Vorprodukt auf dem Werkstückträger einem entsprechenden Bearbeitungsvorgang zu unterziehen, während es auf dem Werkstückträger 15 von der ersten Gießmaschine 1 zur zweiten Gießmaschine 2 transferiert wird. Bei Erreichen der zweiten Gießmaschine 2 wird das Vorprodukt aus dem Werkstückträger 15 entnommen und in die entsprechende Gießkavität der zweiten Gießmaschine 2 eingesetzt. Die mit einem jeweiligen Vorprodukt beladenen Werkstückträger 15 bewegen sich z.B. horizontal von der ersten zur zweiten Gießmaschine 1, 2 und werden über eine vertikale Bewegung zur ersten Gießmaschine 1 zurückgeholt. Die Übergabe des Vorprodukts von der ersten Gießmaschine 1 zum Werkstückträger 15 und von diesem zur zweiten Gießmaschine 2 kann in einer üblichen Weise z.B. mittels Greifern, dem besagten Handhabungsroboter etc. erfolgen. Die Bewegung der Werkstückträger 15 und insbesondere deren Transportgeschwindigkeit werden durch einen entsprechenden Transfer-/Temperierregelkreis der zugehörigen Transfereinrichtung mit optional integrierter Temperiereinrichtung geeignet gesteuert bzw. geregelt, einschließlich einer etwaigen Bearbeitung der Vorprodukte auf den Werkstückträgern 15, wie oben zu den Fig. 1 und 2 beschrieben. Mit anderen Worten sind die Werkstückträger 15 Bestandteil der Transfereinrichtung 6 von Fig. 1, und Bearbeitungsstationen und/oder die Temperiereinrichtung können ganz oder teilweise in die Werkstückträger 15 integriert sein.

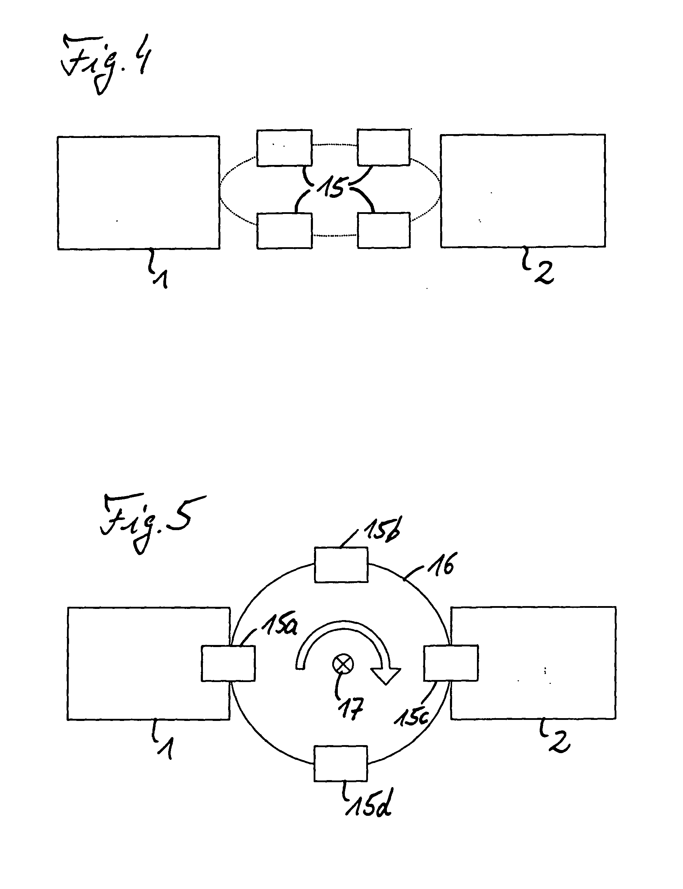

Fig. 4 zeigt alternativ zu Fig. 3 und ebenso in einer lediglich schematischen Draufsicht eine Transfereinrichtung von einem zirkulierenden Typ. Bei diesem bewegen sich die einzelnen Werkstückträger 15 zirkulierend z.B. in einer horizontalen Ebene mittels einer geeigneten Transporteinheit, z.B. einem Förderband oder dergleichen. Im übrigen gelten alle Eigenschaften und Vorteile, wie sie oben zur Transfereinrichtung zur Fig. 3 erläutert wurden, in gleicher Weise für die Transfereinrichtung von Fig. 5, worauf verwiesen werden kann. Es sei an dieser Stelle erwähnt, dass die Werkstücksträger 15 z.B. Teile von Spritzgießwerkzeugen der benutzten Kunststoffspritzgießmaschine sein können.

Fig. 5 zeigt als weitere Transportvariante eine Transfereinrichtung von einem Karusselltyp, bei dem sich die einzelnen Werkstückträger 15 auf einer Karusselleinheit 16 um eine Karussellachse 17 bewegen, die beispielsweise eine vertikale oder horizontale Lage haben kann. Fig. 5 veranschaulicht eine Situation, bei der ein erster Werkstückträger 15a gerade an die erste Gießmaschine 1 angekoppelt ist. Dabei kann durch entsprechend integrierte Bearbeitungsmittel ein Metalleinleger am Vorprodukt abgeformt werden. An einem zweiten Werkstückträger 15b kann z.B. eine Temperierungsmaßnahme in Form einer aktiven Beheizung oder Kühlung des Vorproduktes und/oder eine weitere Bearbeitung des Vorproduktes erfolgen. Ein dritter Werkstückträger 15c ist gerade an die zweite Gießmaschine 2 angekoppelt, wo mit dem hier übergebenen Vorprodukt der Kunststoffspritzvorgang durchgeführt wird. An einem in Karussellrichtung vierten Werkstückträger 15d kann bei Bedarf eine weitere Bearbeitung des aus der zweiten Gießmaschine 2 entnommenen Metall/Kunststoff-Hybridbauteils durchgeführt bzw. das fertiggestellte Hybridbauteil entnommen werden. Es versteht sich, dass analoge Betriebsabläufe für die Transfereinrichtungen der Fig. 3 und 4 realisierbar sind.

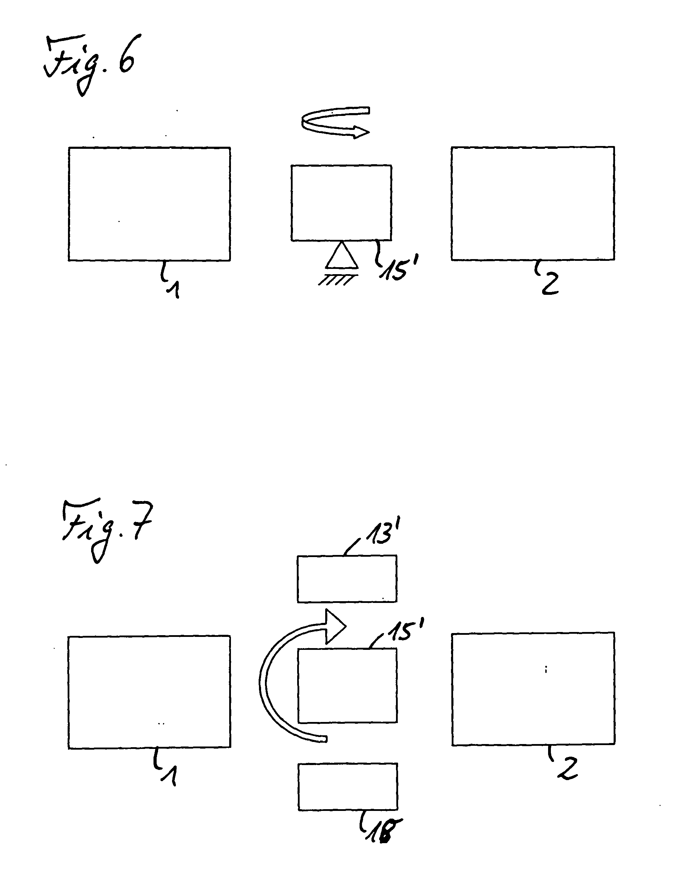

Die Fig. 6 und 7 veranschaulichen in schematischer Seitenansicht bzw. Draufsicht eine Transfereinrichtung von einem Würfeltyp mit einem würfelförmigen Werkstückträger 15', der an jeder seiner vier lateralen Seitenflächen einen Einzelwerkstückträger zur Aufnahme eines Vorproduktes bereitstellt und an seiner Unterseite um eine vertikale Achse drehbeweglich gelagert ist. Alternativ kann der Werkstückträger 15' eine Prismenform mit einer entsprechenden Anzahl von Prismenseitenflächen bzw. Einzelwerkstückträgern haben. Mit zwei gegenüberliegenden lateralen Seitenflächen bzw. Einzelwerkstückträgern ist der Werkstückträger 15' der ersten bzw. der zweiten Gießmaschine 1, 2 zugewandt. Den beiden anderen lateralen Seitenflächen ist im gezeigten Beispiel eine Temperierstation 13' bzw. eine Entnahmestation 18 zugeordnet. An der Temperierstation 13' kann das Vorprodukt nach Entnahme aus der ersten Gießmaschine 1 in gewünschter Weise temperiert werden. Optional kann in die Temperierstation 13' eine Bearbeitungseinheit integriert sein, um das Vorprodukt zusätzlich einem gewünschten Bearbeitungsvorgang zu unterziehen. An der Entnahmestation 18 wird das fertiggestellte Metall/Kunststoff-Hybridbauteil entnommen. Optional kann auch dort eine Bearbeitungsstation vorgesehen sein, um das Metall/Kunststoff-Hybridbauteil nach Entnahme aus der zweiten Gießmaschine 2 noch einem weiteren Bearbeitungsvorgang zu unterziehen.

Wie die oben beschriebenen Ausführungsformen deutlich machen, erlaubt die Erfindung eine flexible Nutzung einer an sich herkömmlichen Metallgießmaschine und einer separaten, an sich herkömmlichen Kunststoffgießmaschine zur Fertigung von Metall/Kunststoff-Hybridbauteilen, wobei die Anzahl an Metall- bzw. Kunststoff-Gießkavitäten variabel und z.B. abhängig von der jeweiligen Gießzykluszeit und der Bauteilgröße festgelegt werden kann. Beispielweise kann die Herstellung von metallischen Vorprodukten in einem ersten Gießprozess, wie einem Metalldruckgießprozess, die gleichzeitige Herstellung einer vorgebbaren ersten Anzahl von Vorprodukten, z.B. je zwei Vorprodukte, während der gleichen Zeitdauer umfassen, in welcher im zweiten Gießprozess, z.B. einem Kunststoffspritzgießprozess, eine vorgebbare zweite Anzahl von Vorprodukten, z.B. je vier Vorprodukte, dem zweiten Gießprozess unterworfen werden. Die erste und die zweite Anzahl können dabei auf ggf. unterschiedliche Zykluszeiten der beiden Gießprozesse abgestimmt werden, optional auch auf die Dauer etwaiger Bearbeitungsprozesse zwischen dem ersten und dem zweiten Gießprozess. Die Anzahl von Metall- und Kunststoff-Gießkavitäten wird geeignet auf die ermittelte optimale erste Anzahl von parallel gefertigten Vorprodukten und zweite Anzahl von gleichzeitig hergestellten Endprodukten, d.h. Metall/Kunststoff-Hybridbauteilen, abgestellt.

Es versteht sich, dass außer den oben explizit erwähnten Typen jeder herkömmliche Maschinentyp für die Metallgießmaschine einerseits und die Kunststoffgießmaschine andererseits beim Gießmaschinensystem der Erfindung verwendbar sind.

Es versteht sich weiter, dass in entsprechenden Ausführungsformen der Erfindung ein oder mehrere weitere Teile zu dem in der ersten Gießmaschine gefertigten Vorprodukt hinzugefügt werden können, z.B. in der Transfereinrichtung bzw. einer Bearbeitungsstation, bevor das dergestalt ergänzte bzw. modifizierte Vorprodukt in der zweiten Gießmaschine dem zweiten Gießprozess unterzogen wird. Insbesondere kann diesbezüglich vorgesehen sein, dass mehrere erste Gießmaschinen einer zweiten Gießmaschine zugeordnet sind und z.B. mit dieser über eine entsprechende Transfereinrichtung kooperieren. In der Transfereinrichtung oder an anderer Stelle können zu dem Vorprodukt einer ersten der mehreren ersten Gießmaschinen das oder die Vorprodukte aus der oder den weiteren ersten Gießmaschinen hinzugefügt werden, z.B. durch einen Montage- oder Fügevorgang, bevor das solchermaßen komplettierte Vorprodukt dann dem zweiten Gießprozess in der zweiten Gießmaschine unterzogen wird.

## Patentansprüche

1. Gießmaschinensystem zur Herstellung von Metall/Kunststoff-Hybridbauteilen, mit
- einer ersten Gießmaschine (1) und einer von dieser separaten zweiten Gießmaschine (2), wobei die erste Gießmaschine eine Metallgießmaschine und die zweite Gießmaschine eine Kunststoffgießmaschine ist oder die erste Gießmaschine eine Kunststoffgießmaschine und die zweite Gießmaschine eine Metallgießmaschine ist,
- einer Transfereinrichtung (6, 10) zum Transfer eines durch einen ersten Gießprozess in der ersten Gießmaschine gefertigten Vorproduktes (4) zu der zweiten Gießmaschine, in der durch einen zweiten Gießprozess aus dem Vorprodukt ein Metall/Kunststoff-Hybridbauteil (8) gebildet wird, und
- einer Temperiereinrichtung (6, 13) zur steuerbaren Temperierung des Vorproduktes nach seiner Entnahme aus der ersten Gießmaschine und vor Beginn des zweiten Gießprozesses, wobei die Temperiereinrichtung eine Kühleinrichtung zur aktiven Kühlung des Vorproduktes und/oder eine Heizeinrichtung zur aktiven Beheizung des Vorproduktes auf ein zur Durchführung des zweiten Gießprozesses geeignetes Temperaturniveau (T2) aufweist.

2. Gießmaschinensystem nach Anspruch 1, wobei die Temperiereinrichtung ganz oder teilweise in die Transfereinrichtung integriert ist.

3. Gießmaschinensystem nach Anspruch 2, wobei die Transfereinrichtung wenigstens einen Werkstückträger (15) beinhaltet, auf dem das Vorprodukt platzierbar ist, und die Temperiereinrichtung als integralen Teil des Werkstückträgers eine Temperatursensorik und/oder ein Temperiermittel zum aktiven Beheizen oder Kühlen des Vorprodukts umfasst.

4. Gießmaschinensystem nach einem der Ansprüche 1 bis 3, wobei die Temperiereinrichtung ein Restwärmenutzungsmittel beinhaltet, das Restwärme eines jeweils im zweiten Gießprozess erhaltenen Metall/Kunststoff-Hybridbauteils zur Beheizung eines jeweils im ersten Gießprozess erhaltenen Vorprodukts nutzt.

5. Gießmaschinensystem nach einem der Ansprüche 1 bis 4, wobei die Temperiereinrichtung ein Mittel zur Erfassung und Überwachung einer Temperatur des Vorproduktes nach Entnahme aus der ersten Gießmaschine aufweist.

6. Gießmaschinensystem nach einem der Ansprüche 1 bis 5, wobei eine Bearbeitungsstation (12a bis 12e) zur Aufnahme des aus der ersten Gießmaschine entnommenen Vorproduktes und zur Durchführung eines vorgebbaren Bearbeitungsprozesses vor Platzieren des Vorproduktes in der zweiten Gießmaschine vorgesehen ist, wobei die Temperiereinrichtung das Vorprodukt vor, während und/oder nach dem Bearbeitungsprozess so temperiert, dass es auf einer gegenüber Raumtemperatur höheren Temperatur gehalten wird, bevor es in der zweiten Gießmaschine platziert wird.

7. Gießmaschinensystem nach Anspruch 6, wobei die Bearbeitungsstation dafür eingerichtet ist, den Bearbeitungsprozess während einer Abkühlphase durchzuführen, während der das Vorprodukt von einer Temperatur am Ende des ersten Gießprozesses auf eine niedrigere vorgebbare Solltemperatur vor Beginn des zweiten Gießprozesses abkühlt, die auf einen Temperaturwert höher als Raumtemperatur vorgegeben ist.

8. Gießmaschinensystem nach Anspruch 7, wobei die Abkühl-Solltemperatur auf einen Temperaturwert zwischen 60°C und 190°C vorgegeben ist.

9. Gießmaschinensystem nach einem der Ansprüche 1 bis 8, wobei die Transfereinrichtung einen Handhabungsroboter umfasst.

10. Verfahren zur Herstellung von Metall/Kunststoff-Hybridbauteilen mit folgenden Schritten:
- Gießen eines Vorproduktes (4) durch einen ersten Gießprozess in einer ersten Gießmaschine (1),
- Entnehmen des Vorproduktes aus der ersten Gießmaschine,
- gesteuertes Temperieren des entnommenen Vorproduktes durch aktives Kühlen des Vorproduktes mittels einer Kühleinrichtung und/oder durch aktives Beheizen des Vorproduktes auf ein zum Durchführen des zweiten Gießprozesses geeignetes Temperaturniveau mittels einer Heizeinrichtung und Transferieren desselben zu einer zweiten Gießmaschine (2),
- Durchführen eines zweiten Gießprozesses mit dem in die zweite Gießmaschine eingebrachten Vorprodukt zur Bildung eines Metall/Kunststoff-Hybridbauteils (8),
- wobei die erste Gießmaschine eine Metallgießmaschine und die zweite Gießmaschine eine Kunststoffgießmaschine ist oder die erste Gießmaschine eine Kunststoffgießmaschine und die zweite Gießmaschine eine Metallgießmaschine ist.

11. Verfahren nach Anspruch 10, wobei Restwärme eines jeweils in der zweiten Gießmaschine gebildeten Metall/Kunststoff-Hybridbauteils zur Temperierung eines jeweils im ersten Gießprozess erhaltenen Vorproduktes genutzt wird.

12. Verfahren nach Anspruch 10 oder 11, wobei das Vorprodukt nach Entnahme aus der ersten Gießmaschine und vor Platzieren in der zweiten Gießmaschine in einer Bearbeitungsstation (12a bis 12e) platziert und dort bearbeitet wird und vor, während und/oder nach dieser Bearbeitung durch gesteuertes Temperieren auf einer vorgebbaren Temperatur höher als Raumtemperatur gehalten wird.

13. Verfahren nach einem der Ansprüche 10 bis 12, wobei das Vorprodukt nach Entnehmen aus der ersten Gießmaschine in einer Bearbeitungsstation (12a bis 12e) platziert und dort während einer Abkühlphase, während der das Vorprodukt von einer Temperatur (T1) am Ende des ersten Gießprozesses auf eine niedrigere vorgebbare Solltemperatur (T2) abkühlt, bearbeitet wird, bevor es zu der zweiten Gießmaschine (2) transferiert wird, wobei die Solltemperatur auf einen Temperaturwert höher als Raumtemperatur vorgegeben wird.

14. Verfahren nach einem der Ansprüche 10 bis 13, wobei als Vorprodukt durch den ersten Gießprozess ein metallisches Vorprodukt in einer Metallgießmaschine gefertigt wird, dessen Anguss mindestens bis zum Abschluss des Transfers in die zweite Gießmaschine belassen wird.

15. Verfahren nach Anspruch 14, wobei durch den zweiten Gießprozess der metallische Anguss des Vorproduktes mit Kunststoffmaterial umspritzt wird.

## Claims

1. A casting machine system for producing hybrid metal/plastic articles, comprising
- a first casting machine (1) and a separated second casting machine (2), wherein the first casting machine is a metal-casting machine and the second casting machine is a plastics-casting machine, or the first casting machine is a plastics-casting machine and the second casting machine is a metal-casting machine,
- a transfer device (6, 10) for transferring a precursor product (4), produced by means of a first casting process in the first casting machine, to the second casting machine, in which a hybrid metal/plastic article (8) is formed from the precursor product by means of a second casting process, and
- a temperature-regulating device (6, 13) for regulating the temperature of the precursor product in a controllable manner after its removal from the first casting machine, and before starting the second casting process, where the temperature-regulating device comprises a cooling device for actively cooling the precursor product and/or a heating device for actively heating the precursor product to a temperature level (T2) suited for performing the second casting process.

2. The casting machine system as claimed in claim 1, wherein the temperature-regulating device is fully or partially integrated in the transfer device.

3. The casting machine system as claimed in claim 2, wherein the transfer device comprises at least one workpiece carrier (15) on which the precursor product can be placed, and the temperature-regulating device comprises, as an integral part of the workpiece carrier, a temperature sensor unit and/or a temperature-regulating means for actively heating or cooling the precursor product.

4. The casting machine system as claimed in any of claims 1 to 3, wherein the temperature-regulating device comprises a residual heat utilization means which utilizes residual heat of a respective hybrid metal/plastic article obtained in the second casting process to heat a respective precursor product obtained in the first casting process.

5. The casting machine system as claimed in any of claims 1 to 4, wherein the temperature-regulating device comprises a means for detecting and monitoring a temperature of the precursor product after removal from the first casting machine.

6. The casting machine system as claimed in any of claims 1 to 5, wherein a processing station (12a to 12e) for receiving the precursor product removed from the first casting machine and for carrying out a predefinable processing process before placing the precursor product in the second casting machine is provided, wherein the temperature-regulating device regulates the temperature of the precursor product before, during and/or after the processing process such that it is held at a temperature higher than room temperature before being placed in the second casting machine.

7. The casting machine system as claimed in claim 6, wherein the processing station is configured for carrying out the processing process during a cooling phase, during which the precursor product cools down from a temperature at the end of the first casting process to a lower, predefinable desired temperature before starting the second casting process, said desired temperature being predefined at a temperature value higher than room temperature.

8. The casting machine system as claimed in claim 7, wherein the desired cooling temperature is predefined at a temperature value of between 60°C and 190°C.

9. The casting machine system as claimed in any of claims 1 to 8, wherein the transfer device comprises a handling robot.

10. A process for producing hybrid metal/plastic articles, comprising the following steps:
- casting a precursor product (4) by means of a first casting process in a first casting machine (1),
- removing the precursor product from the first casting machine,
- controllably regulating the temperature of the removed precursor product through active cooling of the precursor product by means of a cooling device and/or through active heating of the precursor product by means of a heating device to a temperature level suited for performing the second casting process, and transferring the precursor product to a second casting machine (2),
- carrying out a second casting process with the precursor product, introduced into the second casting machine, in order to form a hybrid metal/plastic article (8),
- wherein the first casting machine is a metal-casting machine and the second casting machine is a plastics-casting machine, or the first casting machine is a plastics-casting machine and the second casting machine is a metal-casting machine.

11. The process as claimed in claim 10, wherein residual heat of a respective hybrid metal/plastic article formed in the second casting machine is utilized to regulate the temperature of a respective precursor product obtained in the first casting process.

12. The process as claimed in claim 10 or 11, wherein the precursor product is placed in a processing station (12a to 12e) after its removal from the first casting machine and before it is placed in the second casting machine, is processed in said processing station and is held at a predefinable temperature which is higher than room temperature before, during and/or after this processing by regulating the temperature in a controlled manner.

13. The process as claimed in any of claims 10 to 12, wherein the precursor product after being removed from the first casting machine is placed in a processing station (12a to 12e), where it is processed during a cooling phase, during which the precursor product cools down from a temperature (T1) at the end of the first casting process to a lower, predefinable desired temperature (T2), the desired temperature being predefined at a temperature value which is higher than room temperature, before it is transferred to the second casting machine (2).

14. The process as claimed in any of claims 10 to 13, wherein a metallic precursor product is produced, as the precursor product, in a metal-casting machine by means of the first casting process, a sprue of this metallic precursor product being left at least until completion of the transfer into the second casting machine.

15. The process as claimed in claim 14, wherein the metallic sprue of the precursor product is encapsulated by injection molding with plastic material by means of the second casting process.

## Revendications

1. Système de machines de coulée destiné à la fabrication d'éléments hybrides métal/plastique avec
- une première machine de coulée (1) et une deuxième machine de coulée (2) séparée de celle-ci, pour lequel la première machine de coulée est une machine de coulée pour le métal et la deuxième machine de coulée est une machine de coulée pour le plastique ou la première machine de coulée est une machine de coulée pour le plastique et la deuxième machine de coulée une machine de coulée pour le métal,
- un système de transfert (6, 10) pour le transfert d'un produit semi-fini (4) fabriqué par un premier processus de coulée dans la première machine de coulée dans la deuxième machine de coulée, dans laquelle grâce à un deuxième processus de coulée un élément hybride métal/plastique (8) est formé à partir du produit semi-fini, et
- un dispositif d'équilibrage des températures (6, 13) pour un équilibrage des températures pouvant être piloté du produit semi-fini après son enlèvement de la première machine de coulée et avant le début du deuxième processus de coulée, pour lequel le dispositif d'équilibrage des températures comporte un système de refroidissement pour le refroidissement actif du produit semi-fini et/ou un système de chauffage pour le chauffage actif du produit semi-fini à un niveau de température (T2) approprié à l'exécution du deuxième processus de coulée.

2. Système de machines de coulée selon la revendication 1 pour lequel le dispositif d'équilibrage de températures est entièrement ou partiellement intégré dans le système de transfert.

3. Système de machines de coulée selon la revendication 2 pour lequel le système de transfert contient au moins un porte-pièce (15) sur lequel le produit semi-fini peut être placé et le dispositif d'équilibrage des températures en tant que partie intégrante du porte-pièce comprend un système de détection de température et/ou un moyen d'équilibrage des températures pour le chauffage ou refroidissement actif du produit semi-fini.

4. Système de machines de coulée selon l'une quelconque des revendications 1 à 3 pour lequel le dispositif d'équilibrage des températures contient un moyen d'utilisation de la chaleur résiduelle, qui utilise la chaleur résiduelle d'un élément hybride métal/plastique obtenu respectivement dans le deuxième processus de coulée pour chauffer un produit semi-fini obtenu respectivement dans le premier processus de coulée.

5. Système de machines de coulée selon l'une quelconque des revendications 1 à 4 pour lequel le dispositif d'équilibrage des températures comporte un moyen pour saisir et surveiller une température du produit semi-fini après enlèvement de la première machine de coulée.

6. Système de machines de coulée selon l'une quelconque des revendications 1 à 5 pour lequel un poste d'usinage (12a à 12e) est prévu pour recevoir le produit semi-fini enlevé de la première machine de coulée et pour exécuter un processus d'usinage préalablement spécifiable avant de placer le produit semi-fini dans la deuxième machine de coulée, pour lequel le dispositif d'équilibrage des températures tempère le produit semi-fini avant, pendant et/ou après le processus d'usinage de telle manière qu'il est maintenu à une température plus élevée par rapport à la température ambiante avant d'être placé dans la deuxième machine de coulée.

7. Système de machines de coulée selon la revendication 6 pour lequel le poste d'usinage est agencé de manière à effectuer le processus d'usinage pendant une phase de refroidissement pendant laquelle le produit semi-fini se refroidit d'une température à la fin du premier processus de coulée à une température théorique plus basse préalablement spécifiable avant le début du deuxième processus de coulée, qui est spécifiée à une valeur de température plus élevée que la température ambiante.

8. Système de machines de coulée selon la revendication 7 pour lequel la température théorique de refroidissement est préalablement spécifiée à une valeur de température se situant entre 60° C et 190° C.

9. Système de machines de coulée selon l'une quelconque des revendications 1 à 8 pour lequel le dispositif de transfert comprend un robot de manutention.

10. Procédé destiné à la fabrication d'éléments hybrides métal/plastique avec les étapes suivantes :
- coulée d'un produit semi-fini (4) par un premier processus de coulée dans une première machine de coulée (1),
- enlèvement du produit semi-fini de la première machine de coulée,
- équilibrage des températures piloté du produit semi-fini enlevé par refroidissement actif du produit semi-fini au moyen d'un système de refroidissement et/ou par chauffage actif du produit semi-fini à un niveau de température approprié à l'exécution du deuxième processus de coulée au moyen d'un système de chauffage et transfert de celui-ci à une deuxième machine de coulée (2),
- exécution d'un deuxième processus de coulée avec le produit semi-fini introduit dans la deuxième machine de coulée pour former un élément hybride métal/plastique (8),
- pour lequel la première machine de coulée est une machine de coulée pour le métal et la deuxième machine de coulée une machine de coulée pour le plastique ou la première machine de coulée est une machine de coulée pour le plastique et la deuxième machine de coulée une machine de coulée pour le métal.

11. Procédé selon la revendication 10 pour lequel la chaleur résiduelle d'un élément hybride métal/plastique formé respectivement dans la deuxième machine de coulée est utilisée pour tempérer un produit semi-fini obtenu respectivement dans le premier processus de coulée.

12. Procédé selon la revendication 10 ou 11 pour lequel le produit semi-fini est placé après enlèvement de la première machine de coulée et avant d'être placé dans la deuxième machine de coulée, dans un poste d'usinage (12a à 12e) et y est usiné et est maintenu par équilibrage des températures piloté avant, pendant et/ou après cet usinage, à une température préalablement spécifiable plus élevée que la température ambiante.

13. Procédé selon l'une quelconque des revendications 10 à 12 pour lequel le produit semi-fini est placé après enlèvement de la première machine de coulée dans un poste d'usinage (12a à 12e) et y est usiné pendant une phase de refroidissement, pendant laquelle le produit semi-fini est refroidi d'une température (T1) à la fin du premier processus de coulée à une température théorique (T2) préalablement spécifiable plus basse, avant d'être transféré à la deuxième machine de coulée (2), pour lequel la température théorique est préalablement spécifiée à une valeur de température plus élevée que la température ambiante.

14. Procédé selon l'une quelconque des revendications 10 à 13 pour lequel un produit semi-fini métallique est fabriqué en tant que produit semi-fini par le premier processus de coulée dans une machine de coulée pour métal dont la carotte est laissée au moins jusqu'à la fin du transfert dans la deuxième machine de coulée.

15. Procédé selon la revendication 14 pour lequel la carotte métallique du produit semi-fini par le deuxième processus de coulée est enrobée par extrusion avec un matériau plastique.
